# EUROPEAN PATENT SPECIFICATION

(11) **EP 4 484 207 B1**
(45) Date of publication and mention of the grant of the patent: **05.11.2025**
(21) Application number: 24166878.9
(22) Date of filing: 27.03.2024
(51) Int. Cl.: B60L 50/64, B60L 58/26, H01M 10/613, H01M 10/625, H01M 10/653, H01M 10/6551, H01M 10/6554, H01M 10/6556, H05K 7/20

(54) **BATTERY ENERGY DISTRIBUTION UNIT APPARATUS BDU AND BATTERY PACK COMPRISING THE BDU**
BATTERIEENERGIEVERTEILUNGS-VORRICHTUNG BDU UND BATTERIEPACK UMFASSEND DIE BDU
APPAREIL DE DISTRIBUTION D'ÉNERGIE DE BATTERIE BDU ET BLOC-BATTERIE COMPRENANT LE BDU

(30) Priority: 29.06.2023 CN 202321686751 U; 29.06.2023 CN 202310787429
(43) Date of publication of application: 01.01.2025
(73) Proprietor: Eve Energy Co., Ltd., Huizhou, Guangdong 516006 (CN)
(72) Inventor: LIAO, Hulong, Huizhou, Guangdong, 516006 (CN)
(74) Representative: Murgitroyd & Company

(56) References cited:
- EP-A1- 3 890 054
- EP-A1- 4 191 750
- EP-A2- 2 362 463
- WO-A1-2020/161399
- US-A1- 2019 273 288

## Description

### TECHNICAL FIELD

The present disclosure relates to the field of battery technologies, and specifically, to a BDU apparatus and a battery pack.

### BACKGROUND

A Battery Energy Distribution Unit (BDU), also referred to as a battery disconnect unit, as a special distribution box for an electric vehicle power battery, may provide one or more functions such as pre-charging, super charging, discharge control, circuit overload and short-circuit protection, high-voltage sampling, and low-voltage control for a high-voltage system of a new energy vehicle, to protect and monitor operation of the high-voltage system.

In the related art, with the development of high-voltage, high-current, and super-fast charging battery packs, due to poor heat dissipation of a BDU apparatus, there is a need to select electrical components with a great current-carrying capacity and a higher specification such as a fuse, a relay, and the like. As a result, the BDU apparatus is large in size, and occupies more space in the battery pack, which increases a weight and a cost of the battery pack.

US 2019/273288 A1 provides a method for providing cooling of a power electronics system which is integrated in a battery module. The battery module has a battery housing, containing a large number of energy storage units and the power electronics system which is integrated adjacent thereto and includes a printed circuit board which is populated with power semiconductor switches, and a thermally conductive element which creates thermal contact between the respective energy storage units and the power electronics system. Cooling of the power electronics system is achieved by the thermally conductive element which renders possible transfer of thermal energy from the power electronics system to the energy storage units. At least one side of the battery housing is coupled to a cooling system. A surface area of the thermally conductive element is connected to a respective energy storage unit and is contacted by way of a respective curved portion.

EP 3890054 A1 relates to a battery system and (50) a vehicle including the battery system. The battery system (50) of the present invention comprises a battery module (20) with a plurality of battery cells (10) interconnected between module terminals (21, 22), a battery disconnecting unit, BDU (80) comprising an interface unit (81) electrically connected to and selectively closing an electric path between the module terminals (21, 22) and battery system terminals (51, 52), a housing (70) enclosing the battery module (20) and the BDU (80) and comprising an opening (55), a cooling plate (110) detachably mounted on an outside of the housing (70) and configured for closing the opening (55) of the housing (70), and a thermally conductive and electrically insulating thermal interface material layer, TIM (120), disposed between and adjacent to the interface unit (81) and the cooling plate (110).

EP 2362463 A2 relates to a power source apparatus. The power source apparatus is provided with battery blocks 50 made up of a plurality of battery cells 1 connected in battery stacks, and an outer case that holds the battery blocks 50. A block circuit board 60 to control the battery cells 1 that make up each battery stack and electrical components 63 connected to the block circuit board 60 or the battery stack are disposed in the end-planes of each battery stack. With this arrangement, electrical components are disposed in each battery block eliminating the need for a special purpose electrical component case and allowing outer case enlargement to be avoided.

### TECHNICAL PROBLEMS

The present disclosure provides a Battery Energy Distribution Unit (BDU) apparatus and a battery pack to resolve the foregoing technical problem.

### TECHNICAL SOLUTIONS

The present disclosure provides a BDU apparatus and a battery pack, which may improve a technical problem of poor heat dissipation of the BDU apparatus.

The invention is defined by the claims and any other aspects, configurations or embodiments set forth herein not falling within the scope of the claims are for information only. According to a first aspect, some embodiments of the present disclosure provide a BDU apparatus applied to a battery pack, including:
a housing having an accommodating space;
an electrical component disposed in the accommodating space;
one or more heat conducting members disposed in the housing and connected to the electrical component; and
a cooling mechanism disposed on an outer side of the housing, wherein the electrical component exchanges heat with the cooling mechanism through the heat conducting members; wherein the cooling mechanism (400) comprises a liquid cooling plate (410) connected to the housing (100);
wherein a plurality of limiting holes (121) are provided on the housing (100), the limiting holes (121) are respectively in alignment with the heat conducting members (300), each heat conducting member (300) of the heat conducting members (300) is located in a corresponding one of the limiting holes (121), and the each heat conducting member (300) is connected to the electrical component (200) and the liquid cooling plate (410), and
the each heat conducting member (300) comprises a flat plate portion (310) and a recessed portion (320) that are connected to each other, the flat plate portion (310) is located in the corresponding one of the limiting holes (121) and is connected to the cooling mechanism (400), the recessed portion (320) is recessed toward a side away from the cooling mechanism (400), and the recessed portion (320) is attached and connected to a copper busbar (210) of the electrical component (200).

### BENEFICIAL EFFECTS

The beneficial effects of the present disclosure are: By mounting a plurality of electrical components in the housing, disposing the cooling mechanism on the outer side of the housing, and connecting the heat conducting members to the electrical components, the heat conducting members transfer heat generated by the electrical components to the cooling mechanism, and the heat conducting members exchange heat with the cooling mechanism, thereby dissipate heat and cool the electrical components, and improving poor heat dissipation of the BDU apparatus.

### BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other accompanying drawings from these accompanying drawings without creative efforts.
FIG. 1 is a three-dimensional schematic diagram of a Battery Energy Distribution Unit (BDU) apparatus according to some embodiments of the present disclosure.
FIG. 2 is an exploded view of a BDU apparatus according to some embodiments of present disclosure.
FIG. 3 is a three-dimensional schematic diagram of a housing part of a BDU apparatus according to some embodiments of the present disclosure.
FIG. 4 is an enlarged view of a part A in FIG. 3.
FIG. 5 is a three-dimensional schematic diagram of a liquid cooling plate of a BDU apparatus according to some embodiments of the present disclosure.
FIG. 6 is a three-dimensional schematic diagram of a heat conducting member of a BDU apparatus according to some embodiments of the present disclosure.
FIG. 7 is a side view of a BDU apparatus according to some embodiments of present disclosure.
FIG. 8 is a cross-sectional view of B-B in FIG. 7.
FIG. 9 is an enlarged view of a part C in FIG. 8.

List of reference numerals:
100-housing, 110-base, 120-cover plate, 121-limiting hole, 122-limiting protrusion, 123-screw hole, 124-electrical avoidance hole, 130-accommodating space, 140-mounting plate, 150-cushion pad mounting pin, 160-buckle, 161-buckle sleeve, 162-buckle protrusion, 200-electrical component, 210-copper busbar, 300-heat conducting member, 310-flat plate portion, 320-recessed portion, 321-notch, 400-cooling mechanism, 410-liquid cooling plate, 420-insulating protrusion, 430-water inlet connector, 440-water outlet connector, and 500-insulating heat conducting layer.

### DETAILED DESCRIPTION

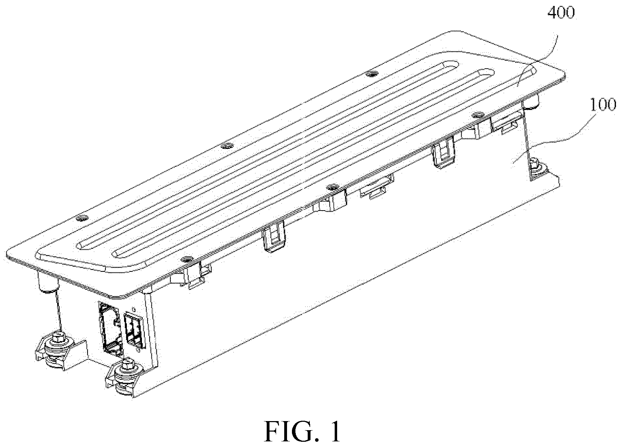

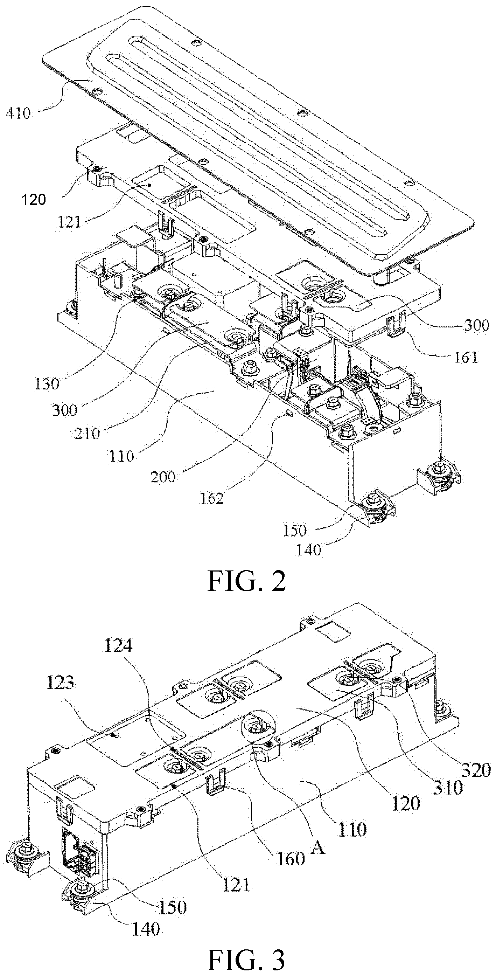

Referring to FIG. 1 and FIG. 2, FIG. 1 is a three-dimensional view of a Battery Energy Distribution Unit (BDU) apparatus according to some embodiments of the present disclosure, and FIG. 2 is an exploded view of a BDU apparatus according to some embodiments of present disclosure.

Some embodiments of the present disclosure provide a BDU apparatus, including a housing such as a housing 100, a plurality of electrical components such as an electrical component 200, heat conducting members such as one or more heat conducting members 300, and a cooling mechanism such as a cooling mechanism 400.

The housing 100 includes a base such as a base 110 and a cover plate such as a cover plate 120. The base 110 is a rectangular box structure, and a groove is provided in the base 110. The base 110 may be made of a plastic material, and has an insulating function to avoid current leakage. The cover plate 120 is a rectangular flat plate. The cover plate 120 is made of a plastic material, and has an insulating function to avoid current leakage. A size of the cover plate 120 is adapted to match a size of the base 110. The base 110 is connected to the cover plate 120, which is covered on an opening of the groove of the base 110. An enclosure of the base 110 and the cover plate 120 form an accommodating space 130. A plurality of interfaces of a high-voltage circuit are disposed on a side surface of the base 110. The plurality of interfaces may include a positive input interface, a negative input interface, a positive output interface, and a negative output interface. The positive input interface and the negative input interface are respectively electrically connected to a positive electrode and a negative electrode of a cell of a power battery. A wire groove is provided on a side of the base 110 away from the cover plate 120. A plurality of mounting plates 140 are disposed at positions on an outer side of the base 110 close to two ends of the base 110, such as four mounting plates 140. Two mounting plates 140 are disposed at one of the two ends of the base 110, and the two mounting plates 140 located at the one end are close to two sides of the base 110. Each mounting plate 140 is connected to a battery box through a cushion pad mounting pin 150. The BDU apparatus may be fixed in the battery box through the mounting plate 140 and the cushion pad mounting pin 150. A mounting operation is simple, and the cushion pad mounting pin 150 may play a shock-absorbing role, to prevent the electrical component 200 in the BDU apparatus from shaking, and ensure reliable connection of the electrical component 200.

The electrical component 200 is a relay and a fuse. The electrical component 200 is electrically connected through a copper busbar 210 to form a high-voltage circuit. The relay receives a signal through a low-voltage wire harness to switch on or off the high-voltage circuit, transfers a voltage signal through the high-voltage wire harness, and performs insulation monitoring and detects states of the fuse and the relay. A plurality of electrical components 200 are disposed in the accommodating space 130, and a side of each electrical component 200 close to the cover plate 120 is connected through the copper busbar 210. The housing 100 made of the insulating material is used to mount the electrical components 200, to avoid current leakage of the BDU apparatus, and ensure security and reliability of the BDU during use.

The heat conducting member(s) 300 is made of a material with a high heat conducting coefficient. The heat conducting member 300 is connected to the copper busbar 210 and the cover plate 120 of the electrical component 200. A heat conducting coefficient of the heat conducting member 300 is higher than a heat conducting coefficient of the copper busbar 210, and heat generated by the electrical component 200 is transferred from the copper busbar 210 through the heat conducting member 300. One copper busbar 210 of the electrical component 200 corresponds to one heat conducting member 300, which ensures a heat conducting effect while avoiding a short circuit or current leakage.

The cooling mechanism 400 is connected to the cover plate 120. The cooling mechanism 400 is located on a side of the cover plate 120 away from the base 110. The heat conducting members 300 exchange heat with the cooling mechanism 400, so as to take away the heat of the heat conducting members 300, thereby dissipate heat of the electrical component 200 of the BDU apparatus. The electrical component 200 is mounted inside the housing 100, and the cooling mechanism 400 is located outside the housing 100, which ensures the heat dissipation of the BDU, and eliminates the need to enlarge the housing 100. The BDU apparatus is small and light as a whole, has a low cost, occupies a small space in a battery pack, and may meet requirements of the battery pack like a high voltage, a high current, and super-fast charging.

Referring to FIG. 1, FIG. 2, and FIG. 5, FIG. 5 is a three-dimensional schematic diagram of a liquid cooling plate of a BDU apparatus according to some embodiments of the present disclosure.

In the BDU apparatus according to the invention, the cooling mechanism 400 includes a liquid cooling plate 410. The liquid cooling plate 410 is in a shape of a rectangular plate. The liquid cooling plate 410 has a first side surface and a second side surface. The first side surface faces the cover plate 120, and the second side surface faces away from the cover plate 120. A water inlet connector 430 and a water outlet connector 440 are disposed on the liquid cooling plate 410. The water inlet connector 430 and the water outlet connector 440 are disposed at positions close to two ends of the liquid cooling plate 410. The water inlet connector 430 and the water outlet connector 440 are disposed on the first side surface. The liquid cooling plate 410 is connected to the cover plate 120. The liquid cooling plate 410 is located on a side of the cover plate 120 away from the base 110. A size of the liquid cooling plate 410 is greater than a size of the cover plate 120. The water inlet connector 430 and the water outlet connector 440 are located outside the housing 100, and the liquid cooling plate 410 performs heat exchange with the heat conducting members 300. The liquid cooling plate 410 may generate condensation during operation. The liquid cooling plate 410 is separated from the accommodating space 130 through the cover plate 120, to prevent the condensation from dripping into the accommodating space 130, thereby protecting the electrical component 200 and improving reliability of the BDU apparatus.

In some embodiments, referring to FIG. 2, a plurality of limiting holes 121 are provided on the cover plate 120. A quantity of limiting holes 121, a quantity of heat conducting members 300, and a quantity of copper busbars 210 are in a one to one correspondence. The limiting holes 121 are respectively in alignment with the heat conducting members 300. Each of the heat conducting members 300 is connected to the electrical component 200 and the liquid cooling plate 410. A shape and a size of a limiting hole 121 are adapted to match a shape and a size of a part of a corresponding heat conducting member 300 in the limiting hole 121. A region on the cover plate 120 between adjacent heat conducting members 300 is a solid part, to prevent the limiting hole 121 from being too large, which causes the condensation to enter the accommodating space 130 from the limiting hole 121. The limiting hole 121 further limits and fixes the heat conducting member 300. The heat conducting member 300 passes through the limiting hole 121 and is connected to the liquid cooling plate 410, to improve the heat conducting effect.

In some examples, a gap between a hole wall of each of the limiting holes 121 and a corresponding heat conducting member 300 may be further filled with a sealant, to prevent the condensation from directly dripping into the accommodating space 130, thereby protecting the electrical component 200 and improving reliability of the BDU apparatus.

In some embodiments, an insulating heat conducting layer 500 is disposed between the heat conducting members 300 and the liquid cooling plate 410. The insulating heat conducting layer 500 covers a contact position between the heat conducting members 300 and the liquid cooling plate 410. The insulating heat conducting layer 500 may avoid a gap between the heat conducting member 300 and the liquid cooling plate 410, which avoids affecting the heat dissipation effect. In addition, the insulating heat conducting layer 500 has an insulating characteristic, preventing current leakage of the heat conducting member 300. In this way, the insulating heat conducting layer 500 plays the role of insulation and heat transfer.

The insulating heat conducting layer 500 may be made of glue with a heat conducting coefficient above 1.5W/m.k, low temperature tolerance below -40°C, high temperature tolerance above 150°C, fire protection grade meeting UL94V-0, and a dielectric strength greater than 1.414×(2U+1000)Vdc/mm, wherein U represents the maximum operating voltage of the BDU apparatus. A thickness of the insulating heat conducting layer 500 ranges from 1 mm to 2 mm, which plays an insulating protective effect and ensures electrical security.

In some examples, a side surface of the liquid cooling plate 410 close to the cover plate 120 is coated with an insulating layer. A thickness of the insulating layer may reach 200 µm. The insulating layer is formed by spraying insulating paint. The insulating layer plays an insulating protective effect and ensures electrical security.

In some embodiments, one or more screw holes 123 are further provided on the cover plate 120, and a gap between a hole wall of each of the screw hole 123 and a corresponding screw is filled with a sealant. This prevents the condensation from entering an interior of the housing 100 from the screw hole 123, and protects the electrical component 200.

In some examples, one or more electrical avoidance holes 124 for exposing the electrical component 200 are further provided on the cover plate 120, and a gap between a hole wall of each of the electrical avoidance holes 124 and the electrical component 200 is filled with a sealant. This prevents the condensation from entering an interior of the housing 100 from the electrical avoidance hole 124, to prevent the condensation from entering the interior of the housing 100 from the electrical avoidance hole 124 while ensuring a sufficient mounting space for the electrical component 200, thereby protecting the electrical component 200.

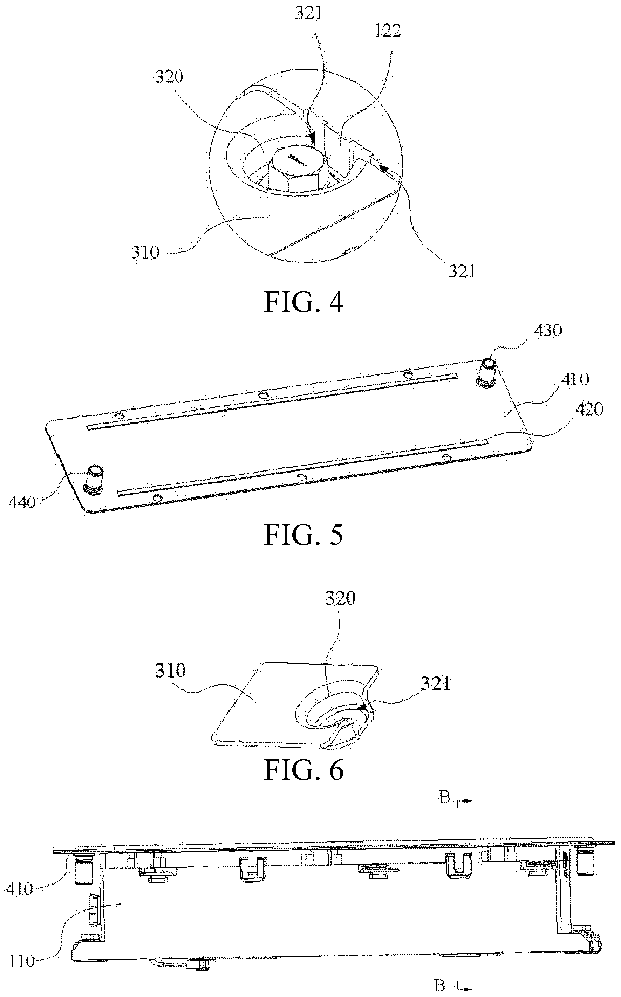

Referring to FIG. 3, FIG. 4, and FIG. 6, FIG. 3 is a three-dimensional schematic diagram of a housing part of a BDU apparatus according to some embodiments of the present disclosure, FIG. 4 is an enlarged view of a part A in FIG. 3, and FIG. 6 is a three-dimensional schematic diagram of a heat conducting member of a BDU apparatus according to some embodiments of the present disclosure.

In the BDU apparatus according to the invention, the heat conducting member 300 includes a flat plate portion 310 and a recessed portion 320 that are connected to each other. The flat plate portion 310 is located in the limiting hole 121, and a size of the flat plate portion 310 is adapted to match a size of the limiting hole 121. A gap between the flat plate portion 310 and an inner wall of the limiting hole 121 may be filled with a sealant, to prevent the condensation from dripping into the accommodating space 130 and ensure electrical reliability. The flat plate portion 310 is connected to the liquid cooling plate 410. The flat plate portion 310 may be directly attached to the cover plate 120, or may be attached to the cover plate 120 through an insulating heat conducting layer. The recessed portion 320 is recessed toward a side away from the liquid cooling plate 410, and a bottom of the recessed portion 320 is attached and connected to the copper busbar 210 of the electrical component 200. The heat conducting member 300 is connected to the copper busbar 210 of the electrical component 200 through a screw. An end of the screw is located in the recessed portion 320, which facilitates assembly of the heat conducting member 300 and the copper busbar 210 of the electrical component 200, and also prevents the screw from contacting the liquid cooling plate 410.

An area of the flat plate portion 310, a contact area between the recessed portion 320 and the copper busbar 210, and a depth of the recessed portion 320 are designed according to thermal conductivity of the heat conducting member 300, a temperature of the liquid cooling plate 410, and a temperature of the copper busbar 210. The area of the flat plate portion 310, the contact area between the recessed portion 320 and the copper busbar 210, and the depth of the recessed portion 320 at different positions are not necessarily the same.

In some embodiments, referring to FIG. 4, the recessed portion 320 has a notch 321, and an edge of the notch 321 is flush with an end of the flat plate portion 310. It may be understood that the notch 321 is U-shaped, and the notch 321 and the end of the flat plate portion 310 are located on the same plane. By providing the heat conducting member 300 with the notch 321, it is ensured that there is no interference between the heat conducting member 300 and electrical components 200, such as sidings of electric relay.

Base on the foregoing embodiments, referring to FIG. 4, a limiting protrusion 122 is disposed on the cover plate 120, the limiting protrusion 122 is located in the limiting hole 121, and the limiting protrusion 122 is disposed in alignment with the notch 321.

It may be understood that the limiting protrusion 122 protrudes from the side wall of the limiting hole 121 to an interior of the limiting hole 121. A size and a position of the limiting protrusion 122 correspond to a size and a position of the notch 321. When the flat plate portion 310 is located in the limiting hole 121, the notch 321 corresponds to the limiting protrusion 122, and the limiting protrusion 122 is located in the notch 321. The limiting protrusion 122 is engaged with the notch 321, to prevent the heat conducting member 300 from rotating in an axis direction of the recessed portion 320, and to locate a mounting position of the heat conducting member 300 on the cover plate 120, facilitating an assembly operation of the user.

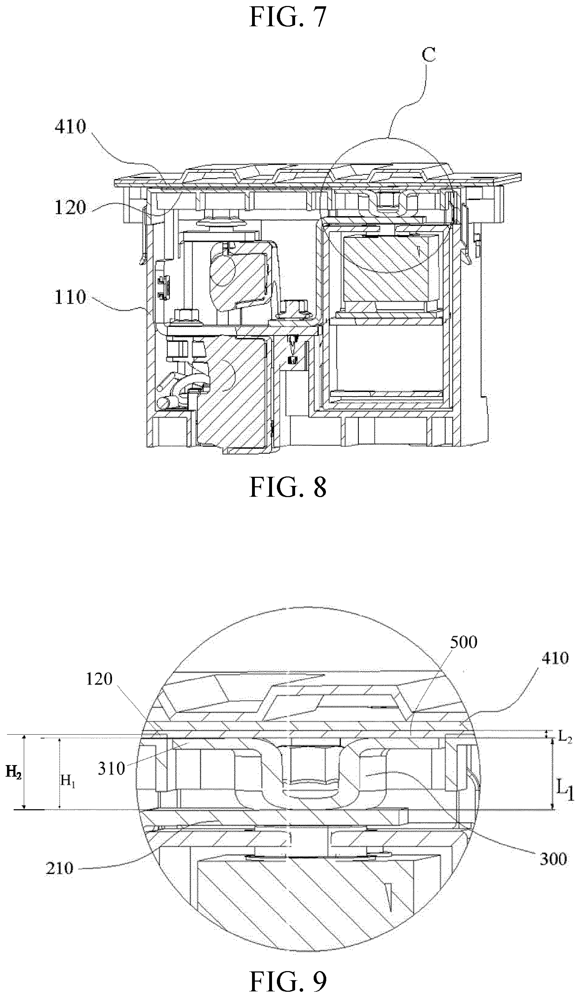

In some embodiments, referring to FIG. 4, a height of a side surface of the flat plate portion 310 away from the electrical component 200 is less than or equal to a height of a side surface of the cover plate 120 away from the base 110. For example, as shown in FIG. 9, taking a plane on which a side surface of the heat conducting member 300 close to the copper busbar 210 is located as an exemplary reference plane, a height H1 of the side surface of the flat plate portion 310 away from the electrical component 200 relative to the reference plane is less than a height H2 of the side surface of the cover plate 120 away from the base 110 relative to the reference plane.

It may be understood that a specific distance is reserved between the side surface of the flat plate portion 310 away from the recessed portion 320 and the side surface of the cover plate 120 away from the base 110. A specific distance is reserved between an upper surface of the flat plate portion 310 and an upper surface of the cover plate 120. The distance may be 0.3 mm, to prevent the heat conducting member 300 from protruding from the upper surface of the cover plate 120, which is beneficial to forming an insulating heat conducting layer 500 between the heat conducting member 300 and the liquid cooling plate 410, ensuring a thickness of a glue layer, and improving the insulating heat conducting effect.

In some embodiments, referring to FIG. 5, an insulating protrusion 420 is disposed on a side surface of the liquid cooling plate 410 close to the cover plate 120, and the insulating protrusion 420 bulges toward the cover plate 120. The insulating protrusion 420 is in a shape of a long strip, and the insulating protrusion 420 extends in a length direction of the liquid cooling plate 410. Two insulating protrusions 420 are disposed. The two insulating protrusions 420 are located close to two sides of the cover plate 120, respectively. The insulating protrusions 420 are made of a plastic material, and a thickness of the insulating protrusion 420 may be 0.3 mm. A side surface of the insulating protrusion 420 away from the liquid cooling plate 410 is attached to the upper surface of the cover plate 120, to ensure that there is a gap of at least 0.3 mm between the liquid cooling plate 410 and the cover plate 120. Even if the upper surface of the heat conducting member 300 is flush with the upper surface of the cover plate 120, there is enough space to form an insulating heat conducting layer.

Referring to FIG. 7, FIG. 8, and FIG. 9, FIG. 7 is a side view of a BDU apparatus according to some examples of present disclosure, FIG. 8 is a cross-sectional view of B-B in FIG. 7, and FIG. 9 is an enlarged view of a part C in FIG. 8.

In some examples, a first heat conducting distance between a side of the heat conducting member 300 close to the cooling mechanism 400 and a side of the heat conducting member 300 close to the copper busbar 210 is L₁, wherein 0<L₁≤90 mm.

It may be understood that the first heat conducting distance L₁ is a distance between a lower surface and an upper surface of the heat conducting member 300. In other words, a distance between a plane on which the upper surface of the flat plate portion 310 is located and a plane on which the lower surface of the recessed portion 320 is located. The heat of the copper busbar 210 is transferred to the cooling mechanism 400 through the heat conducting member 300, thereby cooling the copper busbar 210. A specific value of the first heat conducting distance L₁ depends on a position of the copper busbar 210. If the copper busbar 210 is close to the cover plate 120, the first heat conducting distance L₁ is less. If the copper busbar 210 is close to a bottom of the base 110, the first heat conducting distance L₁ is great. The less the first heat conducting distance L₁, the less the time required for the heat of the copper busbar 210 to be transferred to the cooling mechanism 400. In a limited range, the less the first heat conducting distance L₁ is designed, the better the heat dissipation effect is.

In some examples, referring to FIG. 9, a second heat conducting distance between a side of the flat plate portion 310 away from the copper busbar 210 and the liquid cooling plate 410 is L₂, wherein 0<L₂≤4 mm.

It may be understood that the second heat conducting distance L₂ refers to a distance between the upper surface of the flat plate portion 310 and the lower surface of the liquid cooling plate 410. When an insulating heat conducting layer 500 is disposed between the liquid cooling plate 410 and the flat plate portion 310, the second heat conducting distance L₂ is a thickness of the insulating heat conducting layer 500. The second heat conducting distance L₂ may be 0.5 mm, 1 mm, 2 mm, 3 mm, 4 mm, or other unspecified data. The less the second heat conducting distance L₂, the less the time required for the heat of the copper busbar 210 to be transferred to the cooling mechanism 400. 0<L₂≤ 4 mm is set, which meets a requirement of insulation while taking into account the heat conducting effect, and the design is proper.

In some embodiments, referring to FIG. 2 and FIG. 3, the cover plate 120 is connected to the base 110 through a buckle 160.

The buckle 160 includes a buckle sleeve 161 and a buckle protrusion 162. The buckle sleeve 161 is in a shape of a rectangle, and the buckle sleeve 161 has a hole corresponding to the buckle protrusion 162. The buckle sleeve 161 is disposed on a side surface of the cover plate 120, the buckle protrusion 162 is disposed on a side surface of the base 110, and the buckle sleeve 161 is arranged in alignment with the buckle protrusion 162. A cross-sectional shape of the buckle protrusion 162 is a rightangled triangle, a vertex of the triangle is close to the cover plate 120, and a rightangled side of the triangle is attached to the side surface of the base 110, which is convenient for the buckle protrusion 162 to enter a hole of the buckle sleeve 161 from a hypotenuse, so that the buckle protrusion 162 and the buckle sleeve 161 may be engaged together, and the buckle is firm. When the buckle protrusion 162 and the buckle sleeve 161 are in an engaged state, the buckle protrusion 162 is located in the buckle sleeve 161. Both the buckle sleeve 161 and the buckle protrusion 162 are made of a plastic material. The buckle sleeve 161 has a specific elasticity degree, and a plurality of buckles 160 are spaced apart in a circumferential direction of the housing 100. The cover plate 120 and the base 110 are fixed through the buckle 160, to facilitate assembly and disassembly.

As a variant, the cover plate 120 and the base 110 may be connected by a bolt. For example, a plurality of ear plates protruding toward an outside of the housing 100 are disposed on both the cover plate 120 and the base 110. Screw holes are provided on the ear plate and an edge of the liquid cooling plate 410. The edge of the liquid cooling plate 410, the ear plate of the cover plate 120, and the ear plate of the base 110 are sequentially attached and fixedly connected through the screw.

In some examples, the BDU apparatus further includes a protection system. The protection system includes a temperature sensor and a controller. The temperature sensor and cooling mechanism 400 are connected to the controller. The temperature sensor is disposed in the base 110. The temperature sensor is disposed at a position with the highest temperature in the accommodating space 130. The temperature sensor is configured to collect a temperature value at the position in real time, and send the temperature value to the controller in real time. The controller controls an operation of the cooling mechanism 400 according to the temperature value, to ensure that the BDU operates reliably in a secure temperature range.

Insulation processing is performed on an OT terminal of the temperature sensor. For example, encapsulation is performed on the OT terminal with epoxy resin, to prevent the temperature sensor from directly contacting the electrical component 200 in the accommodating space 130 and thereby causing a short circuit.

In some examples, the BDU apparatus further includes a condensation detection apparatus disposed in the accommodating space 130 or on a side of the cover plate 120 away from the base 110. The condensation detection apparatus is configured to detect a condensation parameter of the BDU apparatus in real time. The condensation detection apparatus is connected to the controller. The controller is configured to send alarm information when the condensation parameter is greater than a preset threshold, which may effectively prevent the BDU apparatus from occurring due to insulation failure. The condensation detection apparatus may be a liquid sensor.

Some embodiments of the present disclosure further provide a battery pack, including the BDU apparatus. The BDU apparatus includes a housing such as a housing 100, a plurality of electrical components such as an electrical component 200, a heat conducting member such as one or more heat conducting members 300, and a cooling mechanism such as a cooling mechanism 400.

The housing 100 includes a base such as a base 110 and a cover plate such as a cover plate 120. The base 110 is a rectangular box structure, and a groove is provided in the base 110. The base 110 may be made of a plastic material, and has an insulating function, to avoid current leakage. The cover plate 120 is a rectangular flat plate. The cover plate 120 is made of a plastic material, and has an insulating function to avoid current leakage. A size of the cover plate 120 is adapted to match a size of the base 110. The base 110 is connected to the cover plate 120, and covers an opening of the groove of the base 110. An enclosure of the base 110 and the cover plate 120 form an accommodating space 130. A plurality of interfaces of a high-voltage circuit are disposed on a side surface of the base 110. The plurality of interfaces may include a positive input interface, a negative input interface, a positive output interface, and a negative output interface. The positive input interface and the negative input interface are respectively electrically connected to a positive electrode and a negative electrode of a cell of a power battery. A wire groove is provided on a side of the base 110 away from the cover plate 120. A plurality of mounting plates 140 are disposed at positions on an outer side of the base 110 close to two ends of the base 110, such as four mounting plates 140. Two mounting plates 140 are disposed at one of the two ends of the base 110, and the two mounting plates 140 located at the one end are close to two sides of the base 110. Each mounting plate 140 is connected to a battery box through a cushion pad mounting pin 150. The BDU apparatus may be fixed in the battery box through the mounting plate 140 and the cushion pad mounting pin 150. A mounting operation is simple, and the cushion pad mounting pin 150 may play a shock-absorbing role, to prevent the electrical component 200 in the BDU apparatus from shaking, and ensure reliable connection of the electrical component 200.

The electrical components 200 are a relay and a fuse. The electrical component 200 is electrically connected through a copper busbar 210 to form a high-voltage circuit. The relay receives a signal through a low-voltage wire harness to switch on or off the high-voltage circuit, transfers a voltage signal through the high-voltage wire harness, and performs insulation monitoring, and detects states of the fuse and the relay. A plurality of electrical components 200 are disposed in the accommodating space 130, and a side of each electrical component 200 close to the cover plate 120 is connected through the copper busbar 210. The housing 100 made of the insulating material is used to mount the electrical components 200, to avoid current leakage of the BDU apparatus, and ensure security and reliability of the BDU during use.

The heat conducting member(s) 300 is made of a material with a high heat conducting coefficient. The heat conducting member 300 is connected to the copper busbar 210 and the cover plate 120 of the electrical component 200. A heat conducting coefficient of the heat conducting member 300 is higher than a heat conducting coefficient of the copper busbar 210, and heat generated by the electrical component 200 is transferred from the copper busbar 210 through the heat conducting member 300. One copper busbar 210 of the electrical component 200 corresponds to one heat conducting member 300, which ensures a heat conducting effect while avoiding a short circuit or current leakage.

The cooling mechanism 400 is connected to the cover plate 120. The cooling mechanism 400 is located on a side of the cover plate 120 away from the base 110. The heat conducting members 300 exchange heat with the cooling mechanism 400, so as to take away the heat of the heat conducting members 300, thereby dissipate heat of the electrical component 200 of the BDU apparatus. The electrical component 200 is mounted inside the housing 100, and the cooling mechanism 400 is located outside the housing 100, which ensures the heat dissipation of the BDU, and eliminates the need to enlarge the housing 100. The BDU apparatus is small and light as a whole, has a low cost, occupies a small space in a battery pack, and may meet requirements of the battery pack like a high voltage, a high current, and super-fast charging.

In the foregoing embodiments, the descriptions of the embodiments have their respective focuses. For a part that is not described in detail in some embodiments, reference may be made to related descriptions in other embodiments.

The terms "first" and "second" in descriptions of the present disclosure are merely intended for a purpose of description, and shall not be understood as an indication or implication of relative importance or implicit indication of a quantity of indicated technical features. Therefore, a feature limited by "first" or "second" may explicitly or implicitly include one or more features.

## Claims

1. A Battery Energy Distribution Unit (BDU) apparatus applied to a battery pack, comprising:
a housing (100) having an accommodating space (130);
an electrical component (200) disposed in the accommodating space (130);
one or more heat conducting members (300) disposed in the housing (100) and connected to the electrical component (200); and
a cooling mechanism (400) disposed on an outer side of the housing (100), wherein the electrical component (200) exchanges heat with the cooling mechanism (400) through the heat conducting members (300), wherein the cooling mechanism (400) comprises a liquid cooling plate (410) connected to the housing (100);
the BDU apparatus **characterized by** further comprising:
a plurality of limiting holes (121) provided on the housing (100), the limiting holes (121) are respectively in alignment with the heat conducting members (300), each heat conducting member (300) of the heat conducting members (300) is located in a corresponding one of the limiting holes (121), and the each heat conducting member (300) is connected to the electrical component (200) and the liquid cooling plate (410), and
the each heat conducting member (300) comprises a flat plate portion (310) and a recessed portion (320) that are connected to each other, the flat plate portion (310) is located in the corresponding one of the limiting holes (121) and is connected to the cooling mechanism (400), the recessed portion (320) is recessed toward a side away from the cooling mechanism (400), and the recessed portion (320) is attached and connected to a copper busbar (210) of the electrical component (200).

2. The BDU apparatus as claimed in claim 1, wherein an insulating heat conducting layer (500) is disposed between the heat conducting members (300) and the liquid cooling plate (410), and the insulating heat conducting layer (500) covers a contact position between the heat conducting members (300) and the liquid cooling plate (410).

3. The BDU apparatus as claimed in claim 1, wherein the recessed portion (320) has a notch (321), and an edge of the notch (321) is flush with an end of the flat plate portion (310).

4. The BDU apparatus as claimed in claim 3, wherein a plurality of limiting protrusions (122) is disposed on the housing (100) and are respectively located in the limiting holes (121), and one of the limiting protrusions (122) located in the corresponding one of the limiting holes is disposed in alignment with the notch (321).

5. The BDU apparatus as claimed in claim 1, wherein a height of a side surface of the flat plate portion (310) away from the electrical component (200) is less than or equal to a height of a side surface of the housing (100) close to the cooling mechanism (400).

6. The BDU apparatus as claimed in claim 1, wherein a first heat conducting distance between a side of the each heat conducting member (300) close to the cooling mechanism (400) and a side of the each heat conducting member (300) close to the copper busbar (210) is L₁, wherein 0<L₁≤90 mm; and/or
a second heat conducting distance between a side of the flat plate portion (310) away from the copper busbar (210) and the liquid cooling plate (410) is L₂, wherein 0<L₂≤4 mm.

7. The BDU apparatus as claimed in any one of claims 1 to 6, wherein one or more screw holes (123) are provided on the housing (100), and a gap between a hole wall of each of the screw holes (123) and a corresponding screw is filled with a sealant; and/or
one or more electrical avoidance holes (124) for exposing the electrical component (200) is provided on the housing (100), and a gap between a hole wall of each of the electrical avoidance holes (124) and the electrical component (200) is filled with a sealant; and/or
a gap between a hole wall of each of the limiting holes (121) and a corresponding one of the heat conducting members (300) is filled with a sealant.

8. The BDU apparatus as claimed in any one of claims 1 to 6, wherein an insulating protrusion (420) is disposed on a side surface of the liquid cooling plate (410) close to the housing (100), and the insulating protrusion (420) is connected to the housing (100); and/or
an insulating layer is disposed on a side surface of the liquid cooling plate (410) facing the housing (100).

9. The BDU apparatus as claimed in any one of claims 1 to 6, wherein the housing (100) comprises a base (110) and a cover plate (120), the base (110) is connected to the cover plate (120) to form the accommodating space (130), and the cooling mechanism (400) is located on a side of the cover plate (120) away from the base (110).

10. The BDU apparatus as claimed in claim 9, wherein the cover plate (120) is connected to the base (110) through a buckle (160).

11. A battery pack, **characterized by** comprising the BDU apparatus as claimed in any one of claims 1 to 10.

## Patentansprüche

1. Batterie-Energieverteilungseinheit(BDU)-Vorrichtung, die auf ein Batteriepack aufgebracht wird, umfassend:
ein Gehäuse (100) mit einem Aufnahmeraum (130);
ein im Aufnahmeraum (130) angeordnetes elektrisches Bauteil (200);
einen oder mehrere im Gehäuse (100) angeordnete und mit dem elektrischen Bauteil (200) verbundene Wärmeleiter (300); und
einen auf einer Außenseite des Gehäuses (100) angeordneten Kühlmechanismus (400), wobei das elektrische Bauteil (200) Wärme mit dem Kühlmechanismus (400) durch die Wärmeleiter (300) austauscht, wobei der Kühlmechanismus (400) eine mit dem Gehäuse (100) verbundene Flüssigkeitskühlplatte (410) umfasst;
wobei die BDU-Vorrichtung **dadurch gekennzeichnet ist, dass** die BDU-Vorrichtung ferner umfasst:
mehrere Begrenzungslöcher (121), die am Gehäuse (100) vorgesehen sind, wobei die Begrenzungslöcher (121) jeweils mit den Wärmeleitern (300) ausgerichtet sind, wobei jeder Wärmeleiter (300) von den Wärmeleitern (300) in einem entsprechenden der Begrenzungslöcher (121) angeordnet ist, und jeder Wärmeleiter (300) mit dem elektrischen Bauteil (200) und der Flüssigkeitskühlplatte (410) verbunden ist, und
wobei jeder Wärmeleiter (300) einen Flachplattenabschnitt (310) und einen Vertiefungsabschnitt (320), die miteinander verbunden sind, umfasst, wobei der Flachplattenabschnitt (310) sich in dem entsprechenden der Begrenzungslöcher (121) befindet und mit dem Kühlmechanismus (400) verbunden ist, wobei der Vertiefungsabschnitt (320) zu einer Seite entfernt vom Kühlmechanismus (400) vertieft ist, und der Vertiefungsabschnitt (320) an einer Kupferleiste (210) des elektrischen Bauteils (200) angebracht und damit verbunden ist.

2. BDU-Vorrichtung nach Anspruch 1, wobei zwischen den Wärmeleitern (300) und der Flüssigkeitskühlplatte (410) eine wärmeisolierende Leitungsschicht (500) angeordnet ist, und die wärmeisolierende Leitungsschicht (500) eine Kontaktstellung zwischen den Wärmeleitern (300) und der Flüssigkeitskühlplatte (410) abdeckt.

3. BDU-Vorrichtung nach Anspruch 1, wobei der Vertiefungsabschnitt (320) eine Kerbe (321) aufweist und ein Rand der Kerbe (321) bündig mit einem Ende des Flachplattenabschnitts (310) steht.

4. BDU-Vorrichtung nach Anspruch 3, wobei mehrere Begrenzungsvorsprünge (122) am Gehäuse (100) angeordnet sind und sich jeweils in den Begrenzungslöchern (121) befinden, und ein sich in dem entsprechenden der Begrenzungslöcher befindender der Begrenzungsvorsprünge (122) in Ausrichtung mit der Kerbe (321) angeordnet ist.

5. BDU-Vorrichtung nach Anspruch 1, wobei eine Höhe einer Seitenfläche des Flachplattenabschnitts (310) entfernt vom elektrischen Bauteil (200) kleiner oder gleich einer Höhe einer dem Kühlmechanismus (400) nahen Seitenfläche des Gehäuses (100) ist.

6. BDU-Vorrichtung nach Anspruch 1, wobei ein erster Wärmeleitabstand zwischen einer dem Kühlmechanismus nahen Seite jedes Wärmeleiters (300) und einer der Kupferleiste (210) nahen Seite jedes Wärmeleiters (300) L₁ beträgt, wobei 0 < L₁ ≤ 90 mm; und/oder
ein zweiter Wärmeleitabstand zwischen einer Seite des Flachplattenabschnitts (310) entfernt von der Kupferleiste (210) und der Flüssigkeitskühlplatte (410) L₂ beträgt, wobei 0 < L₂ ≤ 4 mm.

7. BDU-Vorrichtung nach einem der Ansprüche 1 bis 6, wobei am Gehäuse (100) ein oder mehrere Schraubenlöcher (123) vorgesehen sind, und ein Spalt zwischen einer Lochwand jedes der Schraubenlöcher (123) und einer entsprechenden Schraube mit einem Dichtmittel gefüllt ist; und/oder
ein oder mehrere elektrische Freilegungslöcher (124) zur Belichtung des elektrischen Bauteils (200) am Gehäuse (100) vorgesehen sind, und ein Spalt zwischen einer Lochwand jedes der elektrischen Freilegungslöcher (124) und dem elektrischen Bauteil (200) mit einem Dichtmittel gefüllt ist; und/oder
ein Spalt zwischen einer Lochwand jedes der Begrenzungslöcher (121) und einem entsprechenden der Wärmeleiter (300) mit einem Dichtmittel gefüllt ist.

8. BDU-Vorrichtung nach einem der Ansprüche 1 bis 6, wobei ein Isoliervorsprung (420) auf einer dem Gehäuse (100) nahen Seitenfläche der Flüssigkeitskühlplatte (410) angeordnet ist, und der Isoliervorsprung (420) mit dem Gehäuse (100) verbunden ist; und/oder
eine Isolierschicht auf einer dem Gehäuse (100) zugewandten Seitenfläche der Flüssigkeitskühlplatte (410) angeordnet ist.

9. BDU-Vorrichtung nach einem der Ansprüche 1 bis 6, wobei das Gehäuse (100) eine Basis (110) und eine Abdeckplatte (120) umfasst, wobei die Basis (110) mit der Abdeckplatte (120) verbunden ist, um den Aufnahmeraum (130) zu bilden, und der Kühlmechanismus (400) sich auf einer Seite der Abdeckplatte (120) entfernt von der Basis (110) befindet.

10. BDU-Vorrichtung nach Anspruch 9, wobei die Abdeckplatte (120) über eine Schnalle (160) mit der Basis (110) verbunden ist.

11. Batteriepack, **dadurch gekennzeichnet, dass** das Batteriepack die BDU-Vorrichtung nach einem der Ansprüche 1 bis 10 umfasst.

## Revendications

1. Dispositif d'unité de distribution d'énergie de batterie (Battery Energy Distribution Unit, BDU) appliqué à un bloc de batterie,
**caractérisé en ce qu'**il comprend :
un logement (100) muni d'un espace de réception (130) ;
un composant électrique (200) agencé dans l'espace de réception (130) ;
un ou plusieurs éléments thermo-conducteurs (300) agencés dans le logement (100) et raccordés au composant électrique (200) ; et
un mécanisme de refroidissement (400) agencé sur un côté externe du logement (100), dans lequel le composant électrique (200) échange de la chaleur avec le mécanisme de refroidissement (400) via les éléments thermo-conducteurs (300), dans lequel le mécanisme de refroidissement (400) comprend une plaque de refroidissement à liquide (410) raccordée au logement (100) ;
le dispositif BDU **caractérisé en ce qu'**il comprend en outre :
une pluralité de trous limitants (121) fournie sur le logement (100), les trous limitants (121) sont respectivement alignés avec les éléments thermo-conducteurs (300), chaque élément thermo-conducteur (300) des éléments thermo-conducteurs (300) est situé dans l'un des trous limitants (121) correspondant, et chaque élément thermo-conducteur (300) est raccordé au composant électrique (200) et à la plaque de refroidissement à liquide (410), et
chaque élément thermo-conducteur (300) comprend une partie de plaque plate (310) et une partie renfoncée (320) qui sont mutuellement raccordées, la partie de plaque plate (310) est située dans l'un des trous limitants (121) correspondant et est raccordée au mécanisme de refroidissement (400), la partie renfoncée (320) est enfoncée vers un côté distal du mécanisme de refroidissement (400), et la partie renfoncée (320) est fixée et raccordée à une barre omnibus en cuivre (210) du composant électrique (200).

2. Dispositif de BDU selon la revendication 1, dans lequel une couche thermo-conductrice isolante (500) est agencée entre les éléments thermo-conducteurs (300) et la plaque de refroidissement à liquide (410), et la couche thermo-conductrice isolante (500) recouvre une position de contact entre les éléments thermo-conducteurs (300) et la plaque de refroidissement à liquide (410).

3. Dispositif de BDU selon la revendication 1, dans lequel la partie renfoncée (320) est munie d'une encoche (321), et un bord de l'encoche (321) est à niveau avec une terminaison de la partie de plaque plate (310).

4. Dispositif de BDU selon la revendication 3, dans lequel une pluralité de saillies limitantes (122) est agencée sur le logement (100) et est respectivement située dans les trous limitants (121), et l'une des saillies limitantes (122) agencée dans l'un des trous limitants correspondants est agencée en alignement avec l'encoche (321).

5. Dispositif de BDU selon la revendication 1, dans lequel la hauteur d'une surface latérale de la partie de plaque plate (310) distale du composant électrique (200) est inférieure ou égale à la hauteur d'une surface latérale du logement (100) proximale du mécanisme de refroidissement (400).

6. Dispositif de BDU selon la revendication 1, dans lequel une première distance thermo-conductrice entre un côté de chaque élément thermo-conducteur (300) proximal du mécanisme de refroidissement (400) et un côté de chaque élément thermo-conducteur (300) proximal de la barre omnibus en cuivre (210) est L₁, dans lequel O < L₁ ≤ 90 mm ; et/ou
une deuxième distance thermo-conductrice entre un côté de la partie de plaque plate (310) distal de la barre omnibus en cuivre (210) et la plaque de refroidissement à liquide (410) est L, dans lequel 0 < L₂ ≤ 4 mm.

7. Dispositif de BDU selon l'une quelconque des revendications 1 à 6, dans lequel un ou plusieurs trous de vis (123) sont agencés sur le logement (100), et un espace entre une paroi de trou de chacun des trous de vis (123) et la vis correspondante est remplie d'un scellant ; et/ou
un ou plusieurs trous d'évitement électrique (124) pour exposer le composant électrique (200) sont agencés sur le logement (100), et un espace entre une paroi de trou de chacun des trous d'évitement électrique (124) et le composant électrique (200) est remplie d'un scellant ; et/ou
un espace entre une paroi de trou de chacun des trous limitants (121) et a l'élément thermo-conducteur (300) correspondant est remplie d'un scellant.

8. Dispositif de BDU selon l'une quelconque des revendications 1 à 6, dans lequel une saillie isolante (420) est agencée sur une surface latérale de la plaque de refroidissement à liquide (410) proximale du logement (100), et la saillie isolante (420) est raccordé au logement (100) ; et/ou une couche isolante est agencée sur une surface latérale de la plaque de refroidissement à liquide (410) faisant face au logement (100).

9. Dispositif de BDU selon l'une quelconque des revendications 1 à 6, dans lequel le logement (100) comprend une base (110) et une plaque de couvercle (120), la base (110) est raccordée à la plaque de couvercle (120) pour former l'espace de réception (130), et le mécanisme de refroidissement (400) est agencé sur un côté de la plaque de couvercle (120) distal de la base (110).

10. Dispositif de BDU selon la revendication 9, dans lequel la plaque de couvercle (120) est raccordée à la base (110) via une boucle (160).

11. Bloc de batterie, **caractérisé en ce qu'**il comprend le dispositif de BDU selon l'une quelconque des revendications 1 à 10.
